# EUROPÄISCHE PATENTSCHRIFT

(11) **EP 0 744 807 B1**
(45) Veröffentlichungstag und Bekanntmachung des Hinweises auf die Patenterteilung: **22.10.1997**
(21) Anmeldenummer: 96108244.3
(22) Anmeldetag: 21.05.1996
(51) Int. Cl.: H02H 7/085, H02H 3/087, H02P 6/12

(54) **Verfahren zur Strombegrenzung bei einem Gleichstrommotor, und Gleichstrommotor zur Durchführung eines solchen Verfahrens**
DC motor current limiting method and DC motor for implementing this method
Procédé de limitation du courant d'un moteur à courant continu, et moteur à courant continu pour mettre en oeuvre un tel procédé

(30) Priorität: 25.05.1995 DE 19519248
(43) Veröffentlichungstag der Anmeldung: 27.11.1996
(73) Patentinhaber: PAPST-MOTOREN GmbH & Co. KG, 78106 St Georgen (DE)
(72) Erfinder: Dieterle, Roland, 78112 St. Georgen (DE); Rappenecker, Hermann, Dipl.-Ing., 78147 Vöhrenbach (DE)

(56) Entgegenhaltungen:
- WO-A-89/01255
- WO-A-90/15473
- DE-A- 3 338 764
- US-A- 5 400 206
- PATENT ABSTRACTS OF JAPAN vol. 5, no. 23 (E-45) [695] , 12.Februar 1981 & JP-A-55 150798 (TOYO DENKI SEIZO K.K.), 22.November 1980,

## Beschreibung

Die Erfindung betrifft ein Verfahren zur Strombegrenzung bei einem Gleichstrommotor.

Es gibt verschiedene Verfahren für eine derartige Strombegrenzung. Z.B. kann ein vorhandenes Stell- oder Regelsignal durch eine Strombegrenzungsschaltung in kleine Teilimpulse "zerhackt" werden. Hierbei können sich jedoch Überlagerungsfrequenzen ergeben, welche zu unerwünschten Geräuschen und Radiostörungen führen.

Auch kann man bei Kommutierungsvorgängen bestimmte Signalblöcke unterdrücken, wenn der Motorstrom zu hoch wird. Dieses Verfahren wird z.B. beim Motorcontroller MC 33034 von Motorola verwendet. Dabei entstehen jedoch Stromeinbrüche, welche die Welligkeit des Drehmoments des Motors vergrößern und zu einer starken, lastabhängigen Geräuschbildung führen, besonders, wenn die Statorwicklungen des betreffenden Motors eine niedrige Induktivität haben.

Es ist deshalb eine Aufgabe der Erfindung, ein neues Verfahren zur Strombegrenzung bei einem Gleichstrommotor bereitzustellen.

Diese Aufgabe wird nach der Erfindung gelöst durch ein Verfahren zur Strombegrenzung bei einem Gleichstrommotor, mit folgenden Schritten: In aufeinanderfolgenden Zyklen von im wesentlichen gleichbleibender zeitlicher Dauer wird der Motorstrom jeweils an einer vorgegebenen Stelle eines Zyklus eingeschaltet und in einem vorgegebenen zeitlichen Abstand nach dem Einschalten in einer ersten Abfrage abgefragt und unterbrochen, wenn er höher als ein vorgegebener Wert ist; in einem vorgegebenen zeitlichen Abstand von der ersten Abfrage wird der Motorstrom, sofern er nach der ersten Abfrage nicht unterbrochen wurde, im gleichen Zyklus in einer zweiten Abfrage erneut abgefragt und unterbrochen, wenn er höher als ein vorgegebener Wert ist; in einem vorgegebenen zeitlichen Abstand von der zweiten Abfrage wird der Motorstrom wieder eingeschaltet, sofern er bei einer der Abfragen ausgeschaltet wurde, und der Zyklus wird wiederholt.

Man erhält so eine Art grobe Regelung des Tastverhältnisses bei dem zum Motor fließenden Strom: Ist dieser Strom hoch, so wird das Tastverhältnis klein. Ist er nicht so hoch, so wird das Tastverhältnis höher. Dabei kann insgesamt die Frequenz der durch die Strombegrenzung erzeugten Stromimpulse so hoch gelegt werden, daß sie an der Obergrenze des menschlichen Hörvermögens oder darüber liegt. - Die Erfassung von Statorströmen mittels eines Mikroprozessors ist im Prinzip bekannt aus der EP 0 536 113 B (D 175). Sie dient bei dieser bekannten Anordnung zur Erfassung der Rotorstellung ohne Verwendung eines Rotorstellungssensors.

In manchen Fällen wird ein Anlauf mit dem maximal möglichen Drehmoment eines Motors verlangt. In diesem Fall geht man in vorteilhafter Weiterbildung der Erfindung so vor, daß im Anschluß an das Einschalten des Motors die Abfragen des Motorstroms während einer vorgegebenen Zahl von Rotorumdrehungen oder einer vorgegebenen Zeitspanne desaktiviert werden, um die Strombegrenzung direkt nach dem Einschalten des Motors zu desaktivieren und einen Anlauf mit maximalem Strom und maximalem Drehmoment zu ermöglichen.

Die Erfindung betrifft ferner einen Gleichstrommotor mit einer Strombegrenzungsvorrichtung zum Unterbrechen des Stromes durch den Motor bei oder nach Überschreiten einer vorgegebenen oberen Stromgrenze des gemessenen Motorstroms, wobei die Strombegrenzungsvorrichtung im Betrieb zyklisch arbeitend ausgebildet ist, um jeweils innerhalb eines Zyklus an einem ersten Zeitpunkt in einem vorgegebenen zeitlichen Abstand nach dem Einschalten des Motorstroms diesen zu unterbrechen, sofern er über dem vorgegebenen oberen Grenzwert liegt, um anschließend an einem zweiten Zeitpunkt innerhalb des Zyklus, welcher Zeitpunkt in einem vorgegebenen zeitlichen Abstand vom ersten Zeitpunkt liegt, den Motorstrom zu unterbrechen, sofern dieser zum zweiten Zeitpunkt über dem vorgegebenen oberen Grenzwert liegt, und um anschließend in einem vorgegebenen zeitlichen Abstand vom zweiten Zeitpunkt einen neuen Zyklus zu beginnen und den Motorstrom, sofern er innerhalb des abgelaufenen Zyklus abgeschaltet wurde, neu einzuschalten. Ein solcher Motor läßt sich sehr preiswert herstellen, und die Strombegrenzung arbeitet in sehr zufriedenstellender Weise.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den übrigen Unteransprüchen. Es zeigt:
- Fig. 1: ein Übersichts-Blockschaltbild einer Ausführungsform eines Gleichstrommotors mit Strombegrenzung,
- Fig. 2A: die logischen Gleichungen für die Erzeugung von Ansteuersignalen T1 etc. für die bei Fig. 1 verwendete und in Fig. 2B dargestellte Vollbrückenschaltung,
- Fig. 2B: eine schematische Darstellung einer Ausführungsform der bei Fig. 1 verwendeten Vollbrückenschaltung,
- Fig. 3: eine Darstellung des zeitlichen Verlaufs der beim Motor der Fig. 1 im Betrieb erzeugten Hallsignale (Fig. 3a, b, c), deren logische Werte für verschiedene Rotorstellungen (Fig. 3d), und den Verlauf der Signale T1, etc. für die verschiedenen dargestellten Rotorstellungen (Fig. 3e),
- Fig. 4: ein Schaubild einer bevorzugten Ausführungsform der Erfindung,
- Fig. 5: eine Darstellung des bei Fig. 4 verwendeten Mikroprozessors PIC16CR57A der Firma MicroChip, und seiner Anschlüsse,
- Fig. 6A und 6B: ein Flußdiagramm zur Erläuterung der Fig. 4,
- Fig. 7: verschiedene Diagramme zur Erläuterung von Fig. 4 bis 6, und
- Fig. 8: ein Schaubild zur schematischen Erläuterung von Vorgängen im Motor.

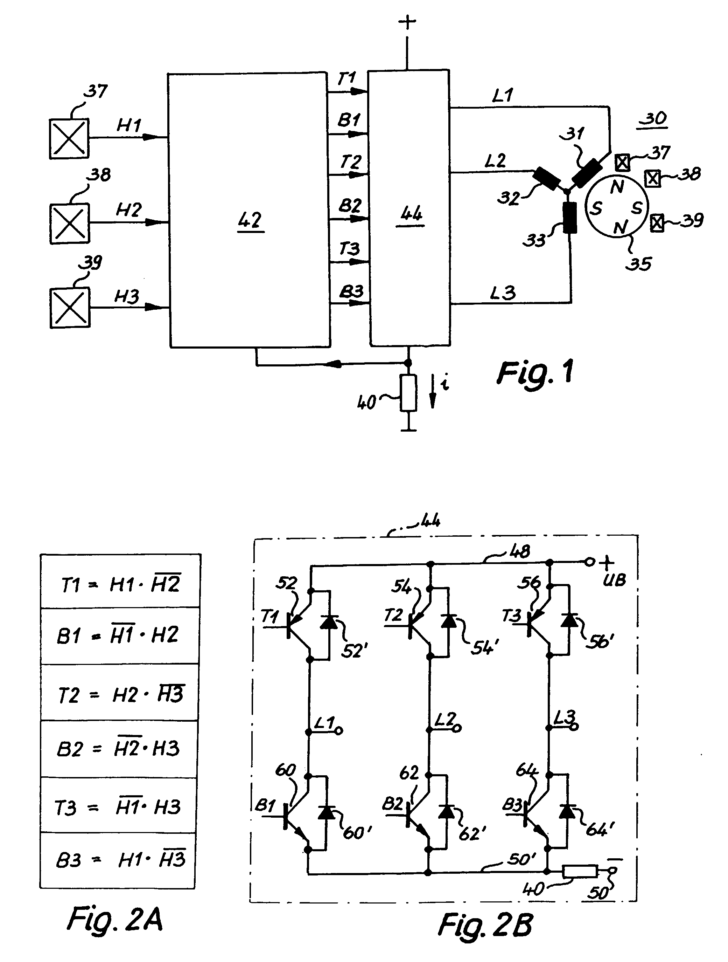

Fig. 1 zeigt als bevorzugte Anwendung einen dreisträngigen elektronisch kommutierten Motor 30 entsprechend dem Stand der Technik. Dieser hat eine Statorwicklung mit drei Strängen 31, 32, 33, deren Anschlüsse mit L1, L2 und L3 bezeichnet sind. Diese drei Stränge, die man auch als Phasen bezeichnet, sind hier im Stern geschaltet, könnten aber ebensogut im Dreieck geschaltet sein. Der permanentmagnetische Rotor des Motors 30 ist symbolisch bei 35 angedeutet, und um ihn herum sind am Stator drei Rotorstellungssensoren 37, 38 und 39 mit Abständen von 120° el. angeordnet. (Da der dargestellte Rotor 35 vierpolig ist, entsprechen 120° el. einem Winkel von 60° mech.). Diese Sensoren sind gewöhnlich Hall-lC' s, welche ein im wesentlichen digitales Ausgangssignal liefern, das also entweder den Wert "0" oder den Wert "1" hat. Sofern andere Sensoren verwendet werden, können deren Ausgangssignale in bekannter Weise digitalisiert werden.

Diese Sensoren 37, 38 und 39 sind in Fig. 1 links nochmals dargestellt. Ihre Ausgangssignale sind mit H1, H2 und H3 bezeichnet und werden einer Kommutierungssteuerung 42 zugeführt, welche Signale T1, B1, T2, B2, T3, B3 abgibt, die einer Vollbrückenschaltung 44 zugeführt werden, an welche die Anschlüsse L1, L2 und L3 der Wicklungen 31, 32, 33 angeschlossen sind. Der Strom i durch diese Vollbrückenschaltung 44 wird mittels eines Meßwiderstands 40 erfaßt, und das Stromsignal wird, wie dargestellt, ebenfalls der Kommutierungssteuerung 42 zugeführt.

Fig. 2B zeigt in prinzipieller Darstellung den Aufbau der Brückenschaltung 44 mit bipolaren Transistoren. Naturgemäß können hier in gleicher Weise MOSFETs, Darlingtontransistoren etc. verwendet werden. Eine Plusleitung mit dem Potential +UB (z.B. + 40 V) ist mit 48 bezeichnet, und eine Minusleitung mit dem Potential 0V (GND) ist mit 50 bezeichnet. Die drei oberen Brückentransistoren 52, 54 und 56 sind pnp-Transistoren, und zu jedem von ihnen ist in der dargestellten Weise eine Freilaufdiode 52', 54' bzw. 56' antiparallel geschaltet. Der Emitter ist jeweils mit der Plusleitung 48 verbunden, der Kollektor mit den Ausgängen L1 bzw. L2 bzw. L3. An der Basis erhalten diese drei oberen Transistoren die Signale T1, T2 und T3, wie sie sich aus Fig. 2A ergeben Hat z.B. der Hall-lC 37 das Ausgangssignal H1 = 1, und der Hall-lC 38 das Ausgangssignal H2/=0, so ist der Transistor 52 leitend, und die Transistoren 54 und 56 sind gesperrt.

Die unteren Brückentransistoren 60, 62 und 64 sind npn-Transistoren; ihre Emitter sind über den gemeinsamen Strommeßwiderstand 40 mit der Minusleitung 50 verbunden, ihre Kollektoren mit den Ausgängen L1, L2, L3, und zu jedem ist eine Freilaufdiode 60' , 62', 64' antiparallel geschaltet. An der Basis erhalten diese unteren Transistoren die Signale B1, B2 bzw. B3, wie sie sich aus Fig. 2A ergeben. Fig. 2A bedarf im übrigen keiner näheren Erläuterung.

Es braucht nicht betont zu werden, daß dies nur ein Ausführungsbeispiel ist, und daß sich die Erfindung z.B. in gleicher Weise für Gleichstrom-Kollektormotoren eignet, oder für elektronisch kommutierte Motoren mit anderen Strangzahlen und anderem Aufbau.

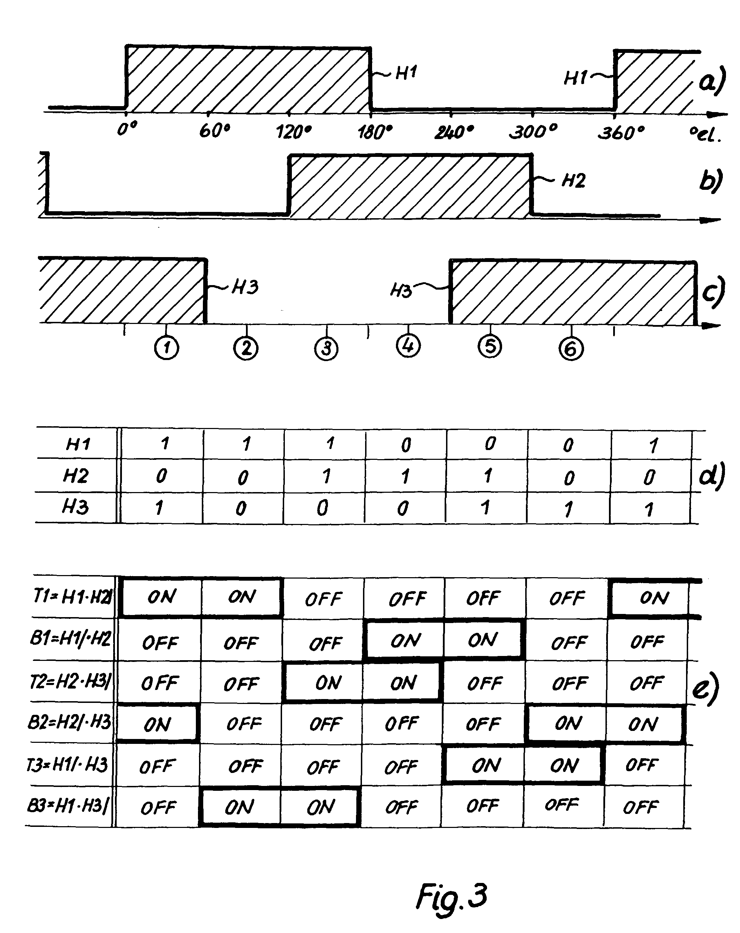

Die Fig. 3a, 3b und 3c zeigen die drei Sensorsignale H1, H2, H3, die jeweils um 120° el. gegeneinander versetzt sind. Die Bezifferung ist so gewählt, daß H1 beim Winkel 0° el. von "0" auf "1" geht, bei 180° el. von "1" auf "0", und bei 360° el. wiederum von "0" auf "1", d.h. wenn sich der Rotor 35 um 360° el. dreht, so ergeben sich die Signale gemäß Fig. 3a, 3b und 3c. Die Funktion dieser Signale ist, der Kommutierungssteuerung 42 die Informationen zu liefern, in welcher Drehstellung sich der Rotor 35 im Augenblick befindet, damit die richtigen Transistoren in der Vollbrückenschaltung eingeschaltet werden.

Für den Drehstellungsbereich 0° el. bis 60° el. liefern z.B. die drei Sensoren die Signalkombination H1, H2, H3 = 101, wie in Fig. 3d dargestellt, und diese Signalkombination bewirkt gemäß Fig. 3e, daß die Signale T1 und B2 hoch werden, d.h. daß in der Brückenschaltung 44 die Transistoren 52 und 62 eingeschaltet werden, so daß von der Plusleitung 48 über den Transistor 52, die Stränge 31 und 32, und den Transistor 62, ein Strom zur Minusleitung 50 fließt.

Im anschließenden Drehwinkelbereich von 61° bis 120° el. lautet die Rotorstellungsinformation H1, H2, H3 = 100, und sie bewirkt, daß die Signale T1 und B3 hoch werden, wodurch die Transistoren 52 und 64 eingeschaltet werden und ein Strom über den Strang 31 und den Strang 33 von der Plusleitung zur Minusleitung fließt.

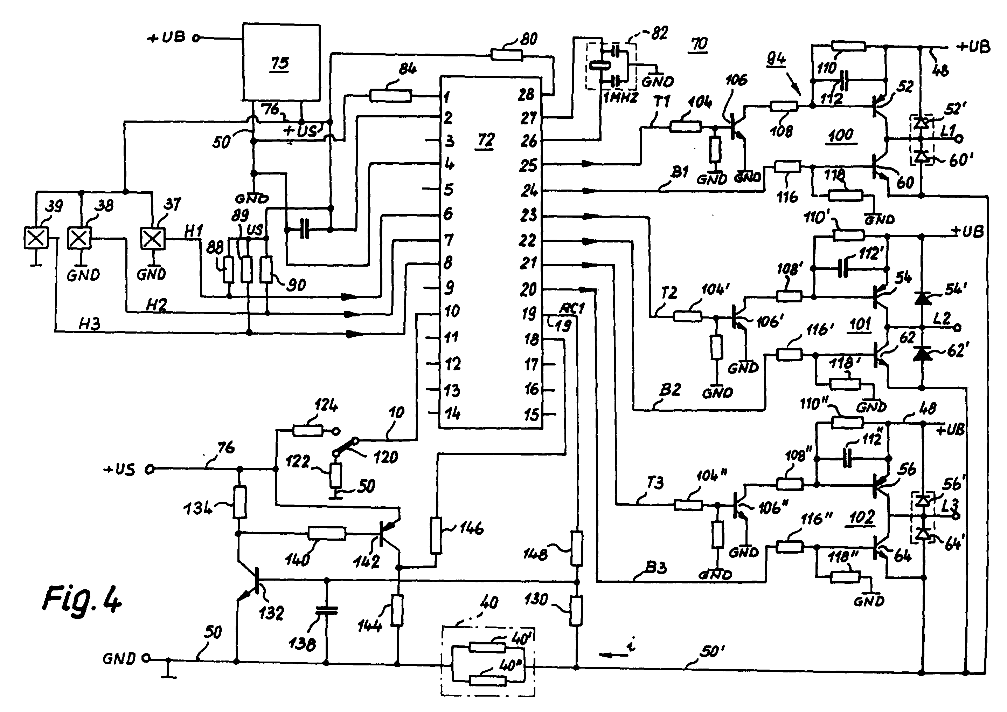

Fig. 4 zeigt ein Schaltbild einer erfindungsgemäßen Motoranordnung 70. Der eigentliche Motor 30 ist derselbe dreisträngige, sechspulsige Motor wie in Fig. 1. Er ist aus Platzgründen in Fig. 4 nicht nochmals dargestellt; er wird an die Anschlüsse L1, L2, L3 rechts in Fig. 4 angeschlossen.

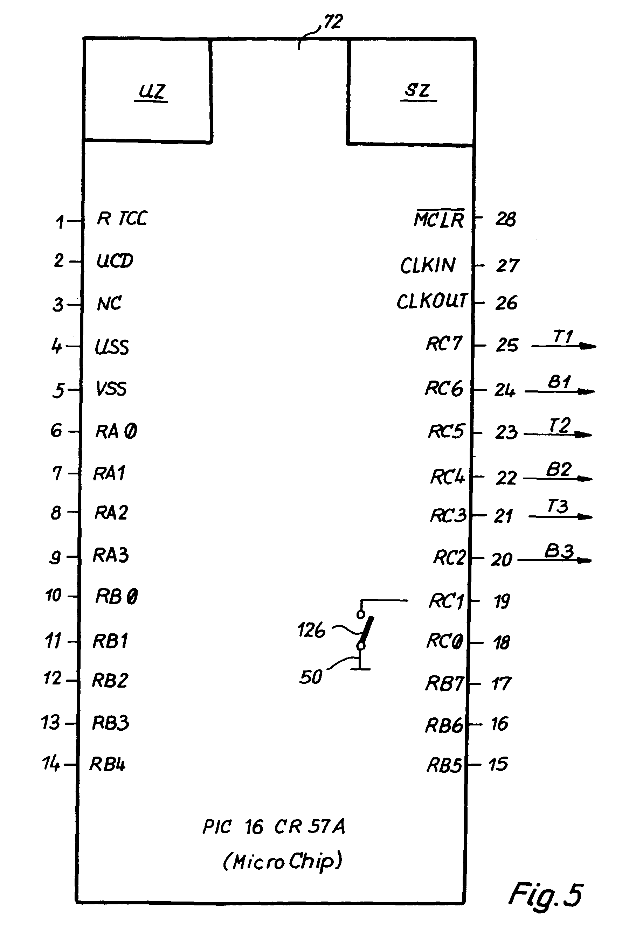

Die Anordnung 70 nach Fig. 4 verwendet einen Mikroprozessor (µP) 72, der in Fig. 5 vergrößert dargestellt ist. Fig. 5 zeigt die Anschlüsse 1 bis 28 dieses µP 72 und deren vom Hersteller (MicroChip) gewählte Bezeichnungen, und der Leser wird zur Information hierauf, und auf die zugehörigen Datenblätter, verwiesen. Der µP 72 enthält auch ein ROM, in welchem sich das verwendete Programm zur Steuerung des µP 72 verwendet, und ein RAM zur Speicherung von flüchtigen Daten, z.B. von Grenzwerten für einen Zähler, etc. Bei diesem µP 72 handelt es sich um einen RISC-Prozessor. Naturgemäß können hier vielerlei Mikroprozessoren angewendet werden, wobei das Hauptziel ist, einen preiswerten µP mit niedrigem Stromverbrauch zu verwenden, der den Temperaturen in einem Elektromotor gewachsen ist. (Der µP 72 wird gewöhnlich direkt in das Gehäuse des Motors eingebaut und bildet einen Bestandteil desselben.)

Zur Stromversorgung des µP 72, ausgehend von der Plusleitung 48, dient eine geregelte Stromversorgung 75, die an ihrem Ausgang 76 eine Spannung +US von z.B. + 5 V liefert. Die Minusleitung 50 ist teilweise auch mit GND bezeichnet. Der Eingang 2 des µP 72 ist direkt mit diesem Ausgang 76 verbunden, und der Eingang 28 über einen Widerstand 80. An die Eingänge 26 und 27 ist, wie dargestellt, ein Schwingquarz 82 (z.B. 4 MHz) angeschlossen, der als Taktgenerator für den µP 72 dient. Der Eingang 4 ist direkt mit der Minusleitung 50 verbunden, der Eingang 1 über einen Widerstand 84, z.B. 100 kΩ. Der Ausgang des Hall-lC 37 ist mit dem Eingang 6 verbunden und führt diesem das Signal H1 zu. Der Ausgang des Hall-lC 38 ist mit dem Eingang 7 verbunden und führt diesem das Signal H2 zu. Der Ausgang des Hall-IC 39 ist mit dem Eingang 8 verbunden und führt diesem das Signal H3 zu.

Die Stromeingänge der Hall-lC' s 37, 38 und 39 sind miteinander und mit dem Ausgang 76 des Spannungsreglers 75 verbunden. Alternativ können diese Hall-IC' s 37, 38, 39 auch von einem Ausgang des Mikroprozessors 72 mit Strom versorgt werden, z.B. mit Stromimpulsen einer Dauer von wenigen Mikrosekunden und einem zeitlichen Abstand von z.B. 50 bis 150 µs. Durch solche Stromimpulse werden die Hall-IC' s 37,38 und 39 immer nur kurzzeitig eingeschaltet und liefern dann kurzzeitig die Signale H1, H2 und H3, die im µP 72 bis zum nächsten Stromimpuls gespeichert und beim nächsten Stromimpuls durch die dann entstehenden neuen Signale H1, H2, H3 ersetzt werden. Diese Art der Abfrage ist Gegenstand der deutschen Patentanmeldung 19515944.6 vom 2. Mai 1995 und veröffentlicht am 07.November 1996, auf deren Inhalt verwiesen wird. Über Widerstände 88, 89, 90 (z.B. je 22 kΩ), die als Pullup-Widerstände bezeichnet werden, sind die Eingänge 6, 7 und 8 mit dem Ausgang 76 des Spannungsreglers 75 verbunden.

Der Ausgang 25 des µP 72 liefert im Betrieb das Signal T1, der Ausgang 24 das Signal B1, der Ausgang 23 das Signal T2, der Ausgang 22 das Signal B2, der Ausgang 21 das Signal T3, und der Ausgang 20 das Signal B3, wie in Fig. 4 dargestellt. Diese Signale dienen, wie bei Fig. 2B, zur Steuerung einer Vollbrückenschaltung 94, deren prinzipieller Aufbau Fig. 2B entspricht, d.h. die Signale T1, B1 etc. werden in genau derselben Weise aus den Signalen H1, H2 und H3 berechnet, wie das anhand der Fig. 1 bis 3 bereits ausführlich beschrieben wurde.

Die Vollbrückenschaltung nach Fig. 4 hat denselben prinzipiellen Aufbau wie die Vollbrückenschaltung 44 der Fig. 2B. Deshalb werden für gleiche oder gleichwirkende Teile dieselben Bezugszeichen verwendet und diese Teile werden gewöhnlich nicht nochmals beschrieben.

Wie Fig. 4 zeigt, enthält die Brückenschaltung 94 drei Teile 100, 101 und 102 mit identischem Aufbau. Deshalb wird im folgenden nur der Teil 100 beschrieben. Die entsprechenden Bauteile des Teils 101 erhalten dasselbe Bezugszeichen mit einem nachgestellten Apostroph, diejenigen des Teils 102 mit zwei nachgestellten Apostrophen, also z.B. 104' und 104".

Das Signal T1 wird über einen Widerstand 104 der Basis eines npn-Transistors 106 zugeführt, dessen Emitter mit der Minusleitung 50 (GND) und dessen Kollektor über einen Widerstand 108 mit der Basis des pnp-Transistors 52 verbunden ist, dessen Emitter über einen Widerstand 110 und einen dazu parallelgeschalteten Kondensator 112 (z.B. 4,7 kΩ und 1 nF) mit der Basis verbunden ist. Der Widerstand 110 und den Kondensator 112 bilden ein RC-Glied und verlangsamen die Schaltvorgänge des Transistors 52, um Abschaltspitzen und Funkstörungen zu reduzieren.

In gleicher Weise wird das Signal T2 über den Widerstand 104' der Basis des Transistors 106' und das Signal T3 über den Widerstand 104" der Basis des Transistors 106" zugeführt.

Wenn das Signal T1 am Ausgang 25 des Mikroprozessors 72 den logischen Wert "1" annimmt, wird der Transistor 106 leitend und bewirkt einen Basisstrom im oberen Brückentransistor 52, so daß auch dieser leitend wird. Wird umgekehrt das Signal T1 niedrig, nimmt also den logischen Wert "0" an, so werden die Transistoren 106 und 52 gesperrt.

Dasselbe gilt analog für das Signal T2 am Ausgang 23, bzw. das Signal T3 am Ausgang 21 des Mikroprozessors 72.

Das Signal B1 vom µP 72 wird über einen Widerstand 116 (z.B. 4,7 kΩ) direkt der Basis des Transistors 60 zugeführt. Diese ist ihrerseits über einen Widerstand 118 (z.B. 4,7 kΩ) mit der Minusleitung 50 verbunden.

Wenn also das Signal B1 am Ausgang 24 des µP 72 den logischen Wert "1" annimmt, wird der Transistor 60 leitend, und wenn es den Wert "0" annimmt, wird dieser Transistor gesperrt. Analoges gilt für die Signale B2 und B3, was keiner Erläuterung bedarf, da die Anordnungen im Aufbau übereinstimmen.

Bei kleinen Motorleistungen können für die Brückentransistoren sehr preiswerte Typen verwendet werden, z.B. BC807-40 für die oberen Brückentransistoren 52, 54 und 56, und BC817-40 für die unteren Brückentransistoren 60, 62 und 64.

Der Eingang 10 (RB0) des µP 72 kann über einen Umschalter 120 entweder - wie dargestellt - über einen Widerstand 122 mit der Minusleitung 50 verbunden werden, oder umgekehrt über einen Widerstand 124 mit der geregelten Plusspannung 76. Auf diese Weise kann der Eingang 10 entweder den logischen Wert "0" oder den logischen Wert "1" annehmen.

Die dargestellte Stellung des Schalters 120 (RB0 = 0) hat zur Folge, daß der Motor 30 beim Blockieren, d.h. dann, wenn der Rotor 35 an einer Drehung gehindert wird, den Motorstrom ausschaltet, und ggf. innerhalb vorgegebener Intervalle neue Startversuche durch kurzzeitiges Einschalten des Motorstroms gemacht werden.

Die andere Stellung des Schalters 120 (Signal RB0 = 1) hat zur Folge, daß der Motor 30 beim Blockieren auf einen niedrigeren Strom umgeschaltet wird, d.h. der Motor erhält, wenn er eingeschaltet wird, aber steht, einen niedrigeren Strom zugeführt, als wenn er eingeschaltet ist, aber sich z.B. während des Hochlaufs dreht. Dadurch erzeugt der Motor auch im Stillstand ein Drehmoment, das aber relativ niedrig ist. Dies kann bei manchen Antrieben von Vorteil sein, um ein konstantes Drehmoment an der Motorwelle aufrechtzuerhalten.

Ferner kann gemäß Fig. 5 der Anschluß 19 (RC1) des µP 72 durch einen internen Schalter 126 mit der Minusleitung 50 verbunden werden, entsprechend dem Signal RC1 = 0. Wird dieser Schalter 126 geöffnet, so wird RC1 hochohmig. Die Verwendung dieses Umschaltvorgangs wird nachfolgend erläutert. Beim Anlauf ist RC1 = 0, d.h. der interne Schalter 126 ist dann geschlossen. (Dieser interne Schalter ist naturgemäß ein Transistor des µP 72).

Der Strommeßwiderstand 40 ist in Fig. 4 gebildet von zwei parallelgeschalteten Widerständen 40' und 40'' von z.B. je 6,8 Ω. Diese liegen zwischen der Minusleitung 50 und einer Leitung 50', die zu den Emittem der Transistoren 60, 62 und 64 führt.

Die Leitung 50' ist über einen Widerstand 130 (z.B. 1,6 kΩ) mit der Basis eines npn-Transistors 132 (z.B. BC847C) verbunden, dessen Emitter mit der Minusleitung 50 und dessen Kollektor über einen Widerstand 134 mit der geregelten Spannung 76 verbunden ist. Zwischen der Basis des Transistors 132 und dessen Emitter liegt ein Kondensator 138 (z.B. 1 nF).

Der Kollektor des Transistors 132 ist über einen Widerstand 140 mit der Basis eines pnp-Transistors 142 verbunden, dessen Emitter mit der geregelten Spannung 76 und dessen Kollektor über einen Widerstand 144 (z.B. 22 kΩ) mit der Minusleitung 50 und über einen Widerstand 146 (z.B. 22 kΩ) mit dem Anschluß 18 (RC0) des µP 72 verbunden ist. - Die Basis des Transistors 132 ist über einen Widerstand 148 (z.B. 1 kΩ) mit dem Anschluß 19 (RC1) des µP 72 verbunden. Dieser Anschluß RC1 ist, wie bereits erläutert, über den internen Schalter 126 umschaltbar.

### Betrieb der Strommeßschaltung mit den Transistoren 132 und 142

Im Betrieb des Motors 70 entsteht durch den Motorstrom i, der durch die Widerstände 40' und 40'' fließt, ein Spannungsabfall.

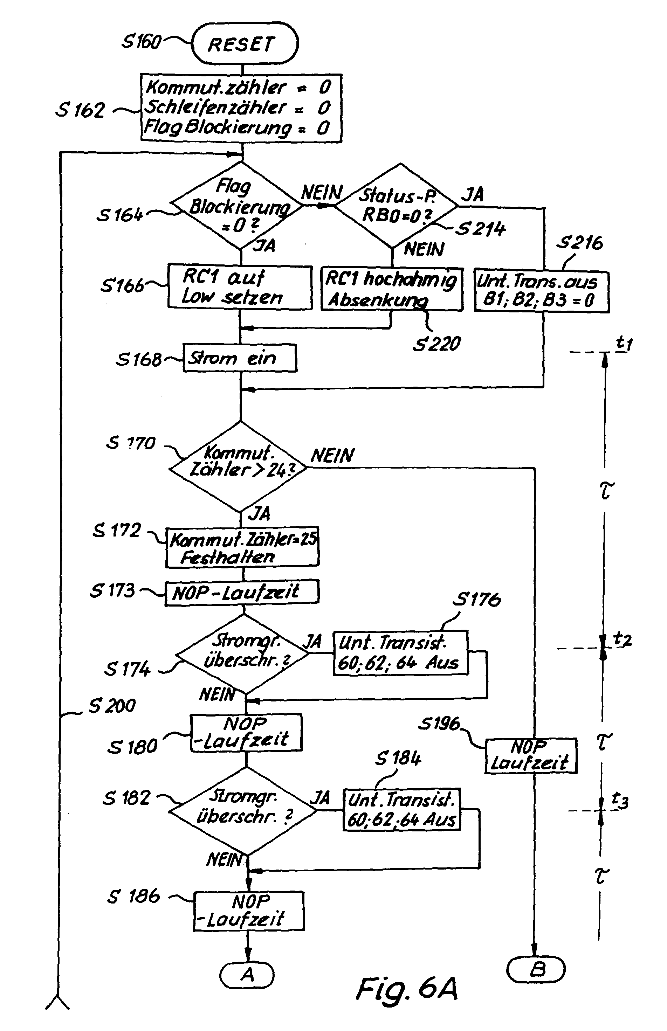

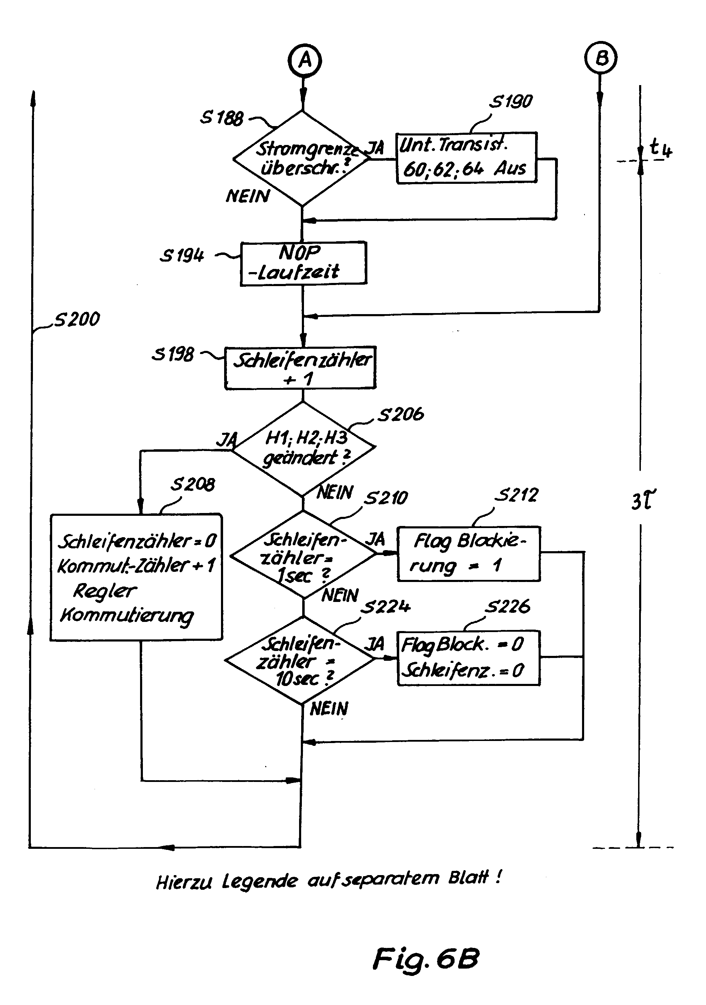

Beim Anlauf ist, wie bereits beschrieben, der interne Schalter 126 geschlossen. Dies bedeutet, daß an der Basis des Transistors 132 nur etwa die Hälfte der Spannung liegt, die durch den Motorstrom i an den Widerständen 40', 40'' erzeugt wird (unter der Voraussetzung, daß die Widerstände 130 und 148 etwa gleich groß sind). Dies bedeutet, daß die Strombegrenzung erst bei einem relativ hohen Motorstrom i wirksam wird, z.B. erst beim Überschreiten von 350 mA, d.h. erst in diesem Fall wird der Transistor 132 leitend. Hierbei wird dann - über den Widerstand 140 - der Transistor 142 ebenfalls leitend. Dies bewirkt, daß der Anschluß RC0 des µP 72, der bisher über die Widerstände 144, 146 mit der Minusleitung 50 verbunden war und deshalb deren Potential hatte, nun durch den leitenden Transistor 142 mit der geregelten Plusspannung am Anschluß 76 verbunden wird. Dies stellt für den µP 72 das Signal dar, daß die Stromgrenze (z.B. 350 mA) überschritten ist, und es bewirkt entsprechende Vorgänge, wie nachfolgend anhand des Flußdiagramms der Fig. 6 ausführlich beschrieben.

Wird der interne Schalter 126 geöffnet, so wird der Anschluß RC1 hochohmig. Dadurch liegt an der Basis-Emitter-Strecke des Transistors 132 die gesamte Spannung an den Widerständen 40', 40'' . In diesem Fall genügt ein kleinerer Strom i, z.B. von 150 mA, um die Transistoren 132 und 142 zum Einschalten zu bringen, so daß das Signal RC0 = "1" wird, und der Strom folglich auf diesen niedrigeren Wert begrenzt wird.

Die Fig. 6A und 6B zeigen das zugehörige Flußdiagramm. Beim Schritt S160 (Reset) erfolgt ein POWER UP RESET des µP 72 beim Einschalten.

Beim Schritt S162 wird ein Kommutierungszähler KZ im µP 72, der in Fig. 5 symbolisch angedeutet ist, auf KZ = 0 gesetzt. Ebenso wird ein Schleifenzähler SZ (ebenfalls in Fig. 5 symbolisch angedeutet) auf SZ = 0 gesetzt. Ebenso wird ein Blockierungs- Flagsignal auf 0 gesetzt. (Ist der Motor blockiert, so wird dieses Flagsignal nach einiger Zeit auf "1" gesetzt).

Beim Schritt 164 wird abgefragt, ob das Blockierungsflag = "0" ist. Falls dies der Fall ist, wird im Schritt S166 RC1 durch Schließen des Schalters 126 (Fig. 5) auf "0" gesetzt, und im Schritt S168 wird zu einem Zeitpunkt t₁ (Fig. 6A, rechts außen) der Strom i im Motor 30 eingeschaltet. Dies erfolgt gemäß Fig. 3, d.h. wenn sich z.B. der Rotor 35 in der Stellung zwischen 0° und 60° el. befindet, werden die Signale T1 und B2 zu "1" gemacht, und es werden folglich die Transistoren 52 und 62 eingeschaltet, wie bereits weiter oben ausführlich beschrieben. In diesem Schritt S168 erfolgt also eine Auswertung der drei Hallsignale H1, H2 und H3, um den Motor in der richtigen Weise einzuschalten.

Im Schritt S170 wird der Kommutierungszähler KZ abgefragt, ob bereits 25 Kommutierungen stattgefunden haben, d.h. ob sich der Rotor 35 bereits um zwei Umdrehungen gedreht hat. Ist dies der Fall, so setzt erstmals die Strombegrenzung ein, und im Schritt S172 wird der Kommutierungszähler auf den Wert KZ = 25 festgehalten, damit er nicht ständig weiterzählt.

Im Schritt S173 wird durch NOP-Befehle eine geringe zeitliche Verzögerung bewirkt. Anschließend wird im Schritt S174 geprüft, ob der Motorstrom i die eingestellte Stromgrenze überschritten hat, d.h. ob RC0 = "1" ist. Falls ja, werden im Schritt S176 zum Zeitpunkt t₂ (Fig. 6A, außen rechts) die Signale B1, B2 und B3 = "0" gemacht, d.h. die unteren Brückentransistoren 60, 62 und 64 werden ausgeschaltet.

Durch die Schritte S170, S172, S173 und S174 liegt zwischen dem Schritt S168 und dem Schritt S176 eine Zeitspanne τ von z.B. 10 µs, d.h. wenn der Strom i im Schritt S176 abgeschaltet wird, ist er mindestens während dieser Zeit τ geflossen.

Wird beim Schritt S174 festgestellt, daß die Stromgrenze nicht überschritten ist,so wird der Motorstrom nicht unterbrochen, und das Programm geht zum Schritt S180. Dieser bewirkt eine zeitliche Verzögerung und kann z.B. aus mehreren NOP-Befehlen bestehen.

Im Schritt S182 wird erneut überprüft, ob die Stromgrenze überschritten ist, falls ja, wird jetzt im Schritt S184 der Motorstrom i unterbrochen, indem die unteren Brückentransistoren 60, 62 und 64 zum Zeitpunkt t3 nichtleitend gemacht werden.

Anschließend geht das Programm zum Schritt 186, der ebenso wie der Schritt S180 eine Verzögerungszeit bewirkt und aus NOP-Befehlen aufgebaut sein kann. (Naturgemäß können im Schritt S180 auch Berechnungen für Regelvorgänge etc. stattfinden, was ebenfalls Zeit beansprucht.) An den Schritt S186 schließt sich der Schritt S188 an, wo erneut geprüft wird, ob die Stromgrenze überschritten ist (ebenso wie in den Schritten S174 und S182). Falls die Stromgrenze erst jetzt überschritten wurde, wird im Schritt S190 der Motorstrom i dadurch unterbrochen, daß die unteren Brückentransistoren 60, 62 und 64 zum Zeitpunkt t₄ nichtleitend gemacht werden.

Es schließt sich ein Schritt S194 an, in welchem wieder (analog den Schritten S180 und S186) eine Programmlaufzeit erzeugt wird, also eine Verzögerung, z.B. durch NOP-Befehle.

### Keine Strombegrenzung direkt nach Anlauf

Bei einer bevorzugten Variante, die aber nicht notwendig angewendet werden muß, geht man wie folgt vor: Wird im Schritt S170 festgestellt, daß der Zählerstand des Kommutierungszählers KZ kleiner als 25 ist, so verzweigt das Programm zum Schritt S196, wo ggf. eine entsprechende Verzögerungszeit durch NOP-Befehle erzeugt werden kann, und das Programm geht anschließend direkt zum Ausgang des Schrittes S194, überspringt also alle Schritte mit Strombegrenzung, so daß direkt nach dem Anlauf das maximal mögliche Drehmoment des Motors 30 erzeugt und der Strom nicht begrenzt wird. Nach dem Ablauf von zwei Umdrehungen wird dann automatisch auf Strombegrenzung umgeschaltet.

Da es direkt nach dem Anlauf des Motors nicht erforderlich ist, daß der Schleifenzähler SZ genaue Werte zählt, da diese Werte für die Drehzahlregelung nicht erforderlich sind (der Motor ist ohnedies zu langsam), kann man in diesem Fall den Schritt S196, d.h. die Erzeugung einer Verzögerung durch NOP-Befehle, weglassen, ohne daß sich an der Funktion des Motors etwas ändert. In diesem Fall verkürzt sich die Zeit für einen Schleifendurchlauf, da ja die Befehle von S170 bis S194 nicht ausgeführt werden, und der Schleifenzähler SZ zeigt dann zu hohe Werte an.

Es ist auch darauf hinzuweisen, daß durch den Zahlenwert in der Abfrage S170 festgelegt werden kann, ob z.B. die Strombegrenzung bereits nach einer halben Umdrehung des Motors einsetzt, oder nach einer ganzen Umdrehung, nach zwei Umdrehungen etc. Dies hängt davon ab, welche Antriebsaufgabe der Motor hat. Treibt der Motor 30 über ein Getriebe ein Gerät an, so daß z.B. 200 Umdrehungen des Motors einer einzigen Umdrehung am Ausgang des Getriebes entsprechen, so wird man die Strombegrenzung, wie in Fig. 6 dargestellt, z.B. während zwei Umdrehungen des Motors (nach dem Einschalten) unterbrechen, damit der Motor sicher anlaufen kann.

Im Schritt S198 wird der Schleifenzähler SZ um den Wert 1 hinaufgezählt. Der Schleifenzähler SZ zählt, wie oft die in Fig. 6 mit S200 bezeichnete Schleife zwischen zwei aufeinanderfolgenden Kommutierungen durchlaufen wird, also z.B. in Fig. 3 zwischen den Winkelstellungen 0° el. und 60° el., oder zwischen 60° el. und 120° el., oder zwischen 120° el. und 180° el., etc. Der Inhalt des Schleifenzählers SZ stellt also ein Maß für die Zeit dar, die der Rotor 35 für eine Drehung von 60° el. benötigt. Um dies zu erreichen, werden durch entsprechende NOP-Befehle alle Schleifendurchläufe, egal auf welchem Weg, etwa auf dieselbe Zeit eingestellt, z.B. einheitlich auf 54 µs. (Man versucht bei der Erfindung, diese Zykluszeit oder Schleifenzeit möglichst kurz zu machen, damit sich eine hohe Frequenz ergibt. Eine Zykluszeit von 50 µs entspricht z.B. einer Frequenz von 20 kHz, die für das menschliche Ohr nicht mehr wahrnehmbar ist.)

In bestimmten Fällen können aber Ausnahmen von dieser Grundregel einheitlicher Schleifenzeit gemacht werden, z.B. dann, wenn im Augenblick keine Strombegrenzung erforderlich ist, weil der Strom ohnedies abgeschaltet ist, oder weil keine Strombegrenzung durchgeführt wird.

Im Schritt S206 wird geprüft, ob sich eines der Signale H1, H2 oder H3 geändert hat. Eine solche Änderung bedeutet, daß der Rotor 35 gegenüber der vorhergehenden Änderung eines dieser Signale einen Winkelweg von 60° el. zurückgelegt hat, daß folglich die Ströme durch die Statorwicklungen 31, 32, 33 entsprechend der neuen Rotorstellung geändert werden müssen, d.h. daß ein Umschaltvorgang in der Vollbrückenschaltung 94 stattfinden muß. Einen solchen Umschaltvorgang bezeichnet man im Elektromaschinenbau als "Kommutierung".

Sofern also eine Änderung eines der Signale H1, H2, H3 aufgetreten ist, ist das ein sicheres Zeichen dafür, daß der Motor 70 läuft, und deshalb wird im Schritt S208 der Schleifenzähler SZ auf 0 zurückgestellt, beginnt also, ab diesem Kommutierungszeitpunkt neu zu zählen. Da eine Kommutierung stattgefunden hat, wird der Kommutierungszähler KZ um den Wert 1 erhöht (sofern er nicht bereits den Wert 25 erreicht hat, auf dem er festgehalten wird). Auch finden im Schritt S208 ggf. Regelvorgänge und Berechnungen für die Kommutierung statt. Dies ist im zugehörigen Hauptpatent P 44 41 372.6 beschrieben, und deshalb wird hierauf in vollem Umfange verwiesen.

Hier ist darauf hinzuweisen, daß die Rechenvorgänge im Schritt S208 eine relativ lange Zeit beanspruchen können, z.B. 150 µs, während ein Schleifendurchlauf S200 sonst - wenn der Schritt S208 nicht durchlaufen wird - bei der Strombegrenzung nur eine exakt festgelegte Zeit T_{C} dauert, die im Normalfall wesentlich kürzer ist als 150 µs.

Da die Vorgänge im Schritt S208 immer dann auftreten, wenn eine Kommutierung stattfinden soll, stört diese längere Rechenzeit nicht, denn sie bewirkt in der Praxis eine - erwünschte - kleine Stromlücke im Bereich der Kommutierung, wie im zugehörigen Hauptpatent P 44 41 372.6 beschrieben. (Durch einen Drehzahlregler - sofern vorhanden - wird der Strom regelmäßig schon vor der Kommutierung unterbrochen, vgl. das Hauptpatent.)

Das Durchlaufen der Schleifen S200 mit normaler Dauer, und damit die beschriebene Zeitmessung zwischen zwei Kommutierungszeitpunkten mittels des Schleifenzählers SZ, beginnt also wegen dieser Berechnungen im Schritt S208 nicht direkt zum Zeitpunkt einer Kommutierung, sondern mit einer geringen zeitlichen Verzögerung, also etwas später, wie im Hauptpatent P 44 41 372.6 ausführlich beschrieben. Der Inhalt des Schleifenzählers SZ ist also durch diesen Umstand geringfügig kleiner als der zeitliche Abstand zwischen zwei Kommutierungszeitpunkten, was jedoch in der Praxis nicht stört und keinen Einfluß hat. Hierauf wird besonders auch deshalb hingewiesen, weil der Schleifendurchlauf über den Schritt S208 wesentlich länger dauert als ein "normaler" Schleifendurchlauf mit Strombegrenzung, der, z.B. durch verschiedene NOP-Befehle, hinsichtlich seiner Zeitdauer exakt festgelegt ist, z.B. auf 54 µs.

Wird im Schritt S206 festgestellt, daß keine Kommutierung stattgefunden hat, so geht das Programm zum Schritt S210 und prüft, ob der Schleifenzähler SZ eine Zeit von einer Sekunde erreicht hat. Wenn z.B. die Zeit für eine Schleife S200 50 µs beträgt, so bedeutet dies, daß über 20.000 Schleifen S200 durchlaufen worden sind, ohne daß sich die Kommutierung geändert hat, d.h. daraus ist zu schließen, daß der Rotor 35 blockiert ist und sich nicht drehen kann. Deshalb wird in diesem Fall im Schritt S212 das Blockierungsflag (vgl. Schritt S164) auf "1" gesetzt, was der Programmlogik anzeigt, daß der Motor blockiert ist.

Anschließend an den Schritt S212 geht das Programm (über die Schleife S200) zurück zum Schritt S164. Dort wird, wenn das Blockierungsflag = 1 ist, zu einem Schritt S214 verzweigt, wo geprüft wird, ob RB0="0" ist. (RB0 ist der Anschluß 10 des µP 72 der über den Umschalter 120 entweder auf "0" oder auf "1" gelegt werden kann.)

Ist RB0 = 0, so werden im anschließenden Schritt S216 die unteren Brückentransistoren 60, 62 und 64 ausgeschaltet, indem B1, B2 und B3 = 0 gesetzt werden. Der Motor ist dann stromlos, aber es werden periodisch Versuche gemacht, ob er starten kann, vgl. die nachfolgende Beschreibung. - Im Anschluß an den Programmschritt S216 geht das Programm zum Schritt S170, d.h. der Schritt S168 wird hier nicht durchlaufen, und der Motorstrom wird nicht eingeschaltet.

Ist RB0 = "1", d.h. der Umschalter 120 ist in seiner oberen Stellung, so geht das Programm zum Schritt S220, d.h. der Schalter 126 im µP 72 (vgl. Fig. 5) wird durch das Programm geöffnet, so daß der Anschluß 19 (RC1) hochohmig wird. Dies hat, wie bereits beschrieben, zur Folge, daß der obere Grenzwert des Stromes für die Strombegrenzung abgesenkt wird, z.B. von 350 auf 150 mA. In diesem Fall wird also bei einer Blockierung des Rotors 35 ein Strom aufrechterhalten, z.B. 150 mA, so daß der Motor auch im Stillstand ständig ein Drehmoment erzeugt, dabei aber nicht überhitzt wird. Ein solches Drehmoment ist für manche Anwendungen erforderlich, z.B. für die Verstellung von Klappen.

Im Anschluß an den Schritt S220 geht das Programm zum Schritt S168, wo also der Strom im Motor wieder eingeschaltet wird, sofern er zuvor an einem der Zeitpunkte t₂, t₃ oder t₄ unterbrochen wurde.

Zurück zu Fig. 6B. Sofern im Schritt S210 festgestellt wird, daß der Schleifenzähler SZ nicht den Wert 1 Sekunde enthält, geht das Programm zum Schritt S224 und prüft dort, ob der Schleifenzähler SZ den Wert 10 Sekunden enthält, d.h. ob der Motor bereits seit 10 Sekunden stillsteht. Falls dies der Fall ist, geht das Programm zum Schritt S226. Dort wird das Blockierungsflag auf "0" gesetzt, ebenso der Schleifenzähler SZ, so daß der Motor einen neuen Startversuch mit vollem Strom macht.

Der Zeitwert im Schritt S224 kann naturgemäß in ganz weiten Grenzen variiert werden. Sofern RB0 = "1" ist, also der Motor auch im Stillstand ständig ein Drehmoment erzeugt, genügt es, wenn ein Startversuch mit vollem Motorstrom z.B. nur jede volle Stunde oder nur jede zweite Stunde durchgeführt wird, und der Abfragewert im Schritt S244 wird dann z.B. auf 3600 Sekunden oder 7200 Sekunden eingestellt.

Im Anschluß an die Schritte S212 oder S226 geht das Programm über die Schleife S200 zurück zum Schritt S164, d.h. die Schleife wird erneut durchlaufen.

Sofern die Strombegrenzung bereits direkt ab dem Start des Motors wirken soll, wird der Schritt S170 weggelassen.

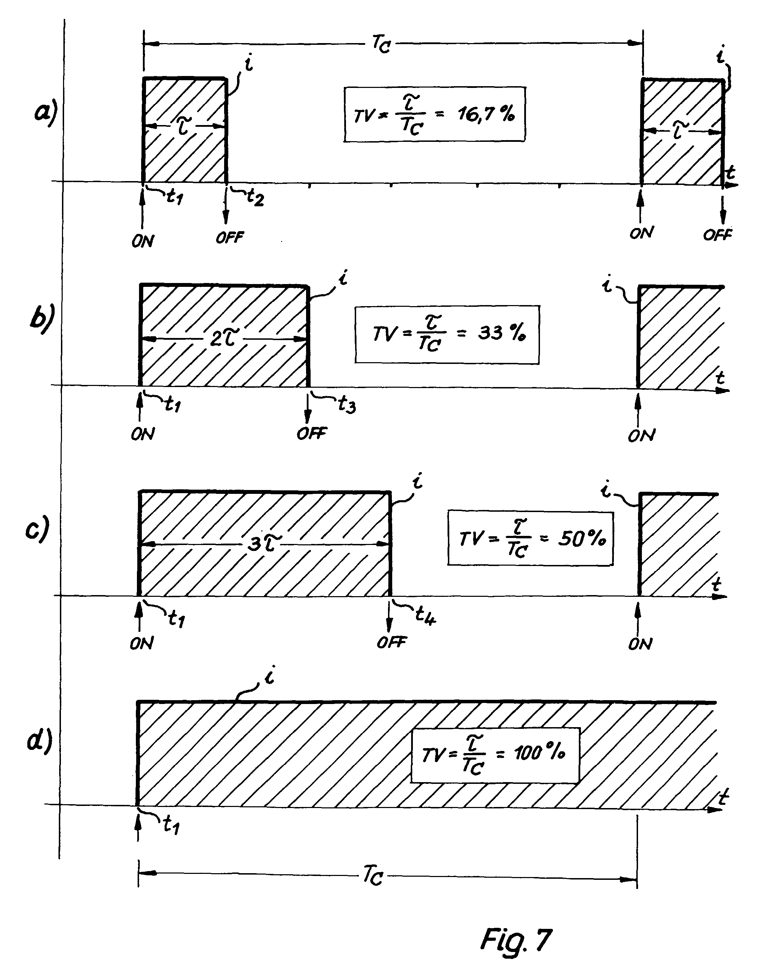

Fig. 7a zeigt den Stromverlauf dann, wenn der Motorstrom hoch ist, d.h. zum Zeitpunkt t₁ wird der Strom i eingeschaltet, und da er bereits zum Zeitpunkt t₂, also bei der Abfrage im Schritt S174, den vorgegebenen Wert überschritten hat, wird er bereits nach der Zeitspanne τ, z.B. 10 µs, zum Zeitpunkt t₂ abgeschaltet.

Die Schleife S200 mit der gesamten Zeitdauer T_{C} (z.B. 60 µs) wird nun durchlaufen, und erst zu Beginn des nächsten Schleifendurchlaufs wird im Schritt S168 der Strom i wieder eingeschaltet.

Man erhält also hier kurze Stromimpulse mit einem Tastverhältnis TV von z.B. 16,7 % und - bei einer Schleifendauer von 60 µs - mit einer Frequenz von 16,6 kHz.

Fig. 7b zeigt den Fall, daß der Strom im Motor weniger hoch ist und - nach dem Einschalten zum Zeitpunkt t₁ - erst zum Zeitpunkt t₃, also vor oder bei der Abfrage im Schritt S182, den vorgegebenen Grenzwert überschreitet. In diesem Fall fließt z.B. der Strom während einer Zeit von 2τ (z.B. 20 µs), und es schließt sich dann eine stromlose Periode von 4τ an, also z.B. von 40 µs, so daß das Tastverhältnis TV hier z.B. 33 % beträgt.

Fig. 7c zeigt den Fall, daß der Strom im Motor noch weniger stark ansteigt und, nach dem Einschalten zum Zeitpunkt t₁, erst zum Zeitpunkt t₄, also vor oder bei der Abfrage im Schritt S188, den vorgegebenen Wert überschritten hat und deshalb abgeschaltet wird.

Hier ergibt sich bei diesem Beispiel ein Tastverhältnis von 50 %, d.h. der Strom fließt nur während der Hälfte der Gesamtzeit. Auch hier beträgt die Frequenz 16,6 kHz, da sich an der Zykluszeit T_{C}, die für den Durchlauf einer Schleife S200 benötigt wird, nichts ändert.

Fig. 7d zeigt den Fall, daß der Motorstrom i nach dem Einschalten zum Zeitpunkt t₁ zu keinem Zeitpunkt den vorgegebenen Grenzwert überschreitet und deshalb ständig eingeschaltet bleibt, d.h. das Tastverhältnis TV beträgt in diesem Fall 100%.

Man erhält also durch die Erfindung eine PWM-Strombegrenzung, also eine Stromgegrenzung mit Impulsbreitenmodulation, wobei das Tastverhältnis aber nicht kontinuierlich variabel ist, sondern in Sprüngen.

Läßt man z.B. die Schritte S188 und S190 weg, so erhält man nur die Tastverhältnisse gemäß Fig. 7a, 7b und 7d, wobei man in diesem Fall die Zeit τ im Verhältnis zu T_{C} größer machen kann. Die Bemessung der Werte für τ und T_{C} wird naturgemäß von demjenigen festgelegt, der den Motor für einen bestimmten Verwendungszweck auslegt.

Durch Hinzufügen weiterer Abfragen kann man noch weitere Tastverhältnisse erzeugen, doch findet dies in der Praxis seine Grenze darin, daß dann der Wert für T_{C} zu hoch wird, d.h. die Frequenz der Stromimpulse wird dann zu niedrig, und diese werden für das menschliche Ohr hörbar, was nicht erwünscht ist.

Die Erfindung ist besonders vorteilhaft in Verbindung mit dem Drehzahlregler, wie er im zugehörigen Hauptpatent P 44 41 372.6 ausführlich beschrieben ist. Bei einem solchen Regler wird die Drehzahl dadurch geregelt, daß der Strom durch eine Motorwicklung erst in einem zeitlichen Abstand nach einem Kommutierungszeitpunkt eingeschaltet wird. Wenn der Motor zu langsam ist, wird dieser zeitliche Abstand klein, und wenn er zu schnell ist, wird er groß. Man erhält deshalb bei der Nenndrehzahl nur relativ kurze Stromimpulse.

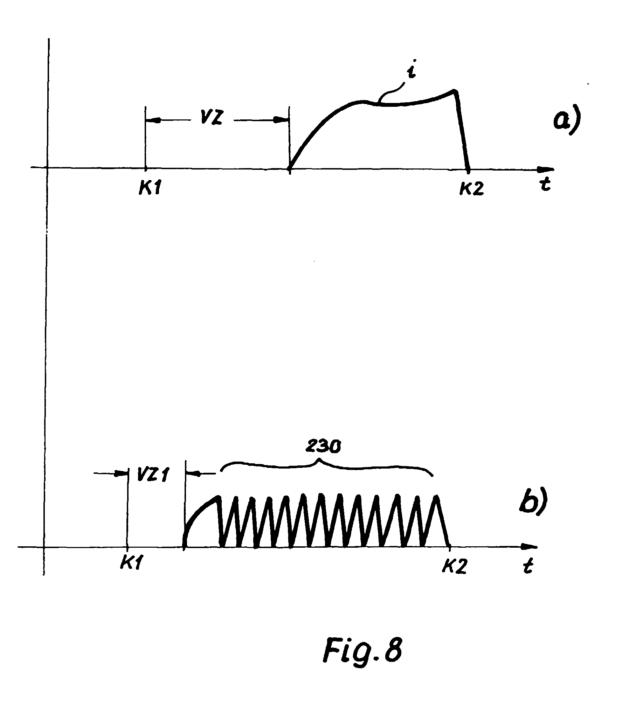

Durch die erfindungsgemäße Strombegrenzung kann man diese kurzen Stromimpulse "auseinanderziehen". Dies zeigt Fig. 8 schematisch, aber anschaulich. Dort sind mit K1 und K2 zwei aufeinanderfolgende Kommutierungszeitpunkte bezeichnet. Der Motorstrom in einem Strang ist mit i bezeichnet. Dieser beginnt in Fig. 8a erst nach Ablauf einer Verzögerungszeit VZ ab dem Kommutierungszeitpunkt K1.

Wird aber der Motorstrom in der erfindungsgemäßen Weise begrenzt, so beginnt gemäß Fig. 8b der (niedrigere) Strom bereits nach Ablauf einer kürzeren Verzögerungszeit VZ1, gerechnet ab K1, und der Strom i wird durch die Strombegrenzung laufend ein- und ausgeschaltet, was nur symbolisch bei 230 angedeutet ist. Dies ist für den Wirkungsgrad des Motors sehr viel günstiger und führt auch zu weniger Motorgeräuschen und zu einer geringeren Restwelligkeit des abgegebenen Drehmoments.

Es ist darauf hinzuweisen, daß wegen der hohen Frequenz der Stromimpulse diese in Fig. 8b nicht korrekt dargestellt werden können, d.h. Fig. 8b ist nur eine ganz schematische Prinzipdarstellung, um das verwendete Prinzip, das man auch als "Motorstrom-Impulsverlängerung" oder "Stromverdünnung" bezeichnen könnte, besser verständlich zu machen.

Man kann auch eine solche Motorstrom-Impulsverlängerung automatisch dann anwenden, wenn sonst die Motorstromimpulse sehr kurz würden, was auch deshalb ungünstig wäre, weil dann der Motorstrom nicht mehr in den Zeitbereichen fließen würde, in denen die induzierte Spannung ihr Maximum hat. (Der sich drehende Rotor 35 induziert in den Statorsträngen 31, 32, 33 eine Spannung, die als "induzierte Spannung" oder "Gegen-EMK" bezeichnet wird. Diese hat bei modernen Motoren gewöhnlich Trapezform. Der Motorstrom sollte in diesem Fall nur eingeschaltet werden, wenn sich diese induzierte Spannung im Strang, der eingeschaltet werden soll, im Bereich ihres Maximums befindet, da sonst der Wirkungsgrad des Motors schlecht wird. Deshalb verbessert die Erfindung gerade bei Motoren mit solchen Drehzahlreglern den Wirkungsgrad erheblich und reduziert auch die Geräuschbildung, da die Welligkeit des Drehmoments kleiner wird.)

Naturgemäß sind im Rahmen der vorliegenden Erfindung vielfache Abwandlungen und Modifikationen möglich. So ist es z.B. nicht notwendig, daß in Fig. 7 für die Impulslängen gerade Vielfache der Zeit τ verwendet werden. Z.B. könnte in Fig. 7a die Impulslänge τ betragen, in Fig. 7b 2,5 τ, und in Fig. 7c 3,8 τ.

Z. B. treten im normalen Betrieb eines Motors, d.h. nach dem Hochlauf, praktisch nur noch die Impulsformen gemäß Fig. 7a und 7b auf, so daß in diesem Fall die Schritte S188 und S190 des Flußdiagramms (für die dritte Abfrage des Motorstroms) nicht nötig sind. Man kann deshalb im normalen Betrieb, also dann, wenn der Motor mit seiner vorgegebenen Drehzahl, also z.B. seiner geregelten Drehzahl, läuft, statt der Schritte S188 und S190 andere Berechnungen ausführen, z.B. die synthetische Berechnung eines Sensorsignals, wie in der deutschen, Anmeldung 195 17 665.0 vom 13. Mai 1995 veröffentlicht am 14.November 1996, beschrieben.

Dagegen treten bei blockiertem Motor (und reduziertem Sollwert des Motorstroms durch Umschaltung von RC1 auf hochohmig) auch die Impulsformen gemäß Fig. 7c auf, und deshalb sind hier die Schritte S188 und S190 zweckmäßig, während umgekehrt dort die "synthetische" Berechnung eines Sensorsignals entfallen kann. Man kann also je nach Betriebszustand anstelle der Schritte S188, S190 (für die dritte Abfrage des Motorstroms) andere Programmschritte ausführen, um auf diese Weise die Zykluszeit T_{c} möglichst kurz und damit die Frequenz der Strombegrenzung möglichst hoch zu halten. Solche und andere Abwandlungen liegen im Ermessen des Fachmanns, der eine solche Strombegrenzung maßgeschneidert für einen bestimmten Motor, und eine bestimmte Antriebsaufgabe, auslegt.

### Legende zu Fig. 6A und 6B

- S160: RESET
- S162: Kommutierungszähler KZ = 0
Schleifenzähler SZ = 0
Blockierungsflag = 0
- S164: Blockierungsflag = 0?
- S166: RC1 auf Low ("0") setzen
- S168: Strom ein
- S170: Kommutierungszähler KZ > 24?
- S172: Kommutierungszähler KZ auf 25 festhalten.
- S173: NOP - Laufzeit
- S174: Stromgrenze überschritten?
- S176: Untere Brückentransistoren 60, 62, 64 aus
- S180: NOP - Laufzeit
- S182: Stromgrenze überschritten?
- S184: Untere Brückentransistoren 60, 62, 64 aus
- S186: NOP - Laufzeit
- S188: Stromgrenze überschritten?
- S190: Untere Brückentransistoren 60, 62, 64 aus
- S194: NOP - Laufzeit
- S196: NOP - Laufzeit
- S198: Schleifenzähler SZ +1
- S200: (Deutet symbolisch die Schleife an.)
- S206: H1, H2, H3 geändert?
- S208: Schleifenzähler SZ=0
Kommutierungszähler KZ +1
Regler (Drehzahl)
Kommutierung
- S210: Schleifenzähler SZ = 1 Sekunde?
- S212: Blockierungsflag = "1"
- S214: RB0 = "0"?
- S216: Untere Brückentransistoren 60, 62, 64 aus
- S220: RC1 hochohmig » Stromabsenkung
- S224: Schleifenzähler SZ = 10 Sekunden?
- S226: Blockierungsflag = "0"
Schleifenzähler SZ = 0

## Patentansprüche

1. Verfahren zur Strombegrenzung bei einem Gleichstrommotor, mit folgenden Schritten:
in aufeinanderfolgenden Zyklen von im wesentlichen gleichbleibender zeitlicher Dauer (T_{C}) wird der Motorstrom (i) jeweils an einer vorgegebenen Stelle (t₁) eines Zyklus eingeschaltet (S168) und in einem vorgegebenen zeitlichen Abstand (τ) nach dem Einschalten in einer ersten Abfrage (S174) abgefragt und unterbrochen (S176), sofern er höher ist als ein vorgegebener Wert;
in einem vorgegebenen zeitlichen Abstand (τ) von der ersten Abfrage wird der Motorstrom, sofern er nach der ersten Abfrage nicht unterbrochen wurde, im gleichen Zyklus in einer zweiten Abfrage (S182) erneut abgefragt und unterbrochen (S184), wenn er höher ist als ein vorgegebener Wert;
in einem vorgegebenen zeitlichen Abstand von der zweiten Abfrage wird der Motorstrom wieder eingeschaltet (S168), sofern er bei einer der Abfragen ausgeschaltet wurde, und der Zyklus wird wiederholt.

2. Verfahren nach Anspruch 1, bei welchem die Dauer (T_{C}) eines Zyklus weniger als 100 µs beträgt, um eine Strombegrenzung mit einer Frequenz von mindestens 10 kHz zu erhalten.

3. Verfahren nach Anspruch 1 oder 2, bei welchem in einem vorgegebenen zeitlichen Abstand (τ) nach der zweiten Abfrage, und vor dem Wiedereinschalten, der Motorstrom (i) im gleichen Zyklus in einer dritten Abfrage (S188) erneut abgefragt und unterbrochen wird, sofern er bei der ersten oder zweiten Abfrage nicht unterbrochen wurde und er höher als ein vorgegebener Wert ist.

4. Verfahren nach einem oder mehreren der Ansprüche 1 bis 3, bei welchem die vorgegebenen Abstände (τ) zwischen dem Einschalten und der ersten Abfrage sowie der ersten Abfrage und der zweiten Abfrage im wesentlichen gleich groß sind.

5. Verfahren nach Anspruch 3 oder 4, bei welchem der vorgegebene zeitliche Abstand (τ) zwischen dem Einschalten und der ersten Abfrage, der ersten Abfrage und der zweiten Abfrage, und der zweiten Abfrage und der dritten Abfrage, jeweils etwa gleich groß sind.

6. Verfahren nach einem oder mehreren der vorhergehenden Ansprüche, bei welchem im Anschluß an das Einschalten des Motors die Abfragen des Motorstroms während einer vorgegebenen Zahl von Umdrehungen oder einer vorgegebenen Zeitspanne desaktiviert werden (S170, S196), um die Strombegrenzung direkt nach dem Einschalten des Motors zu desaktivieren und einen Anlauf mit maximalem Strom und maximalem Drehmoment zu ermöglichen.

7. Verfahren nach einem oder mehreren der vorhergehenden Ansprüche, bei welchem der vorgegebene Wert des Motorstroms, bei welchem nach den einzelnen Abfragen der Motorstrom (i) unterbrochen wird, abhängig von einer Betriebsbedingung des Motors eingestellt wird.

8. Verfahren nach Anspruch 7, bei welchem im blockierten Zustand des Motors, d.h. wenn sich dessen Rotor (35) nicht drehen kann, der vorgegebene Wert des Motorstroms reduziert wird (S214, S220).

9. Verfahren nach einem oder mehreren der vorhergehenden Ansprüche, bei welchem der Motorstrom dann, wenn sich der Rotor (35) nicht dreht, abgeschaltet wird.

10. Verfahren nach Anspruch 8 oder 9, bei welchem in vorgegebenen zeitlichen Abständen (S224) ein Anlaufversuch durchgeführt wird.

11. Gleichstrommotor mit einer Strombegrenzungsvorrichtung zum Unterbrechen des Stromes durch den Motor (30) bei oder nach Überschreiten einer vorgegebenen oberen Stromgrenze des gemessenen Motorstroms (i),
wobei die Strombegrenzungsvorrichtung (72, 132, 142) im Betrieb zyklisch arbeitend ausgebildet ist,
- um jeweils innerhalb eines Zyklus (T_{C}) an einem ersten Zeitpunkt (t₂) in einem vorgegebenen zeitlichen Abstand (τ) nach dem Einschalten (t₁) des Motorstroms diesen zu unterbrechen, sofern er über dem vorgegebenen oberen Grenzwert liegt,
- um anschließend an einem zweiten Zeitpunkt (t₃) innerhalb des Zyklus, welcher Zeitpunkt in einem vorgegebenen zeitlichen Abstand (τ) vom ersten Zeitpunkt liegt, den Motorstrom zu unterbrechen, sofern dieser zum zweiten Zeitpunkt (t₃) über dem vorgegebenen oberen Grenzwert liegt,
- und um anschließend in einem vorgegebenen zeitlichen Abstand vom zweiten Zeitpunkt (t₃) einen neuen Zyklus zu beginnen und den Motorstrom, sofern er innerhalb des abgelaufenen Zyklus abgeschaltet wurde, neu einzuschalten.

12. Gleichstrommotor nach Anspruch 11, bei welchem eine Umschaltvorrichtung vorgesehen ist, welche die vorgegebene obere Stromgrenze bei Blockierung des Rotors (35) auf einen niedrigeren Wert reduziert.

13. Gleichstrommotor nach Anspruch 11, bei welchem eine Abschaltvorrichtung vorgesehen ist, welche bei Blockierung des Rotors (35) den Motorstrom abschaltet.

14. Gleichstrommotor nach Anspruch 12 oder 13, bei welchem eine Vorrichtung vorgesehen ist, welche bei blockiertem Rotor (35) nach Ablauf einer vorgegebenen Zeitspanne den Motor neu startet.

## Claims

1. Method for limiting the current with a direct current motor with the following steps:
in successive cycles of essentially constant time (T_{c}) the motor current (i) is switched on (S168) at a predetermined point (t₁) of a cycle and sampled in a first sampling (S174) at a predetermined interval of time (τ) after switching on and cut (S176) if it is higher than a predetermined value;
at a predetermined interval of time (τ) from the first sampling the motor current, unless it was cut after the first sampling, is sampled again in the same cycle in a second sampling (S182) and cut (S184) if it is higher than a predetermined value;
at a predetermined interval of time from the second sampling the motor current is switched on again (S168) if it was switched off at the time of one of the samplings, and the cycle is repeated.

2. Method according to claim 1, in which the time (T_{c}) of a cycle is less than 100 µs in order to limit the current with a frequency of at least 10 kHz.

3. Method according to claim 1 or 2, in which at a predetermined interval of time (τ) after the second sampling, and before switching on again, the motor current (i) is sampled again in the same cycle in a third sampling (S188) and cut if it was not cut at the time of the first or second sampling and is higher than a predetermined value.

4. Method according to one or more of claims 1 to 3, in which the predetermined intervals of time (τ) between switching on and the first sampling and the first sampling and the second sampling are essentially the same.

5. Method according to claim 3 or 4, in which the predetermined intervals of time (τ) between switching on and the first sampling, the first sampling and the second sampling, and the second sampling and the third sampling, are each roughly the same.

6. Method according to one or more of the preceding claims, in which following the switching on of the motor the samplings of the motor current are deactivated during a predetermined number of revolutions or a predetermined length of time (S170, S196) in order to deactivate the current limiting directly after switching on the motor and to allow starting with the maximum current and maximum torque.

7. Method according to one or more of the preceding claims, in which the predetermined value of the motor current at which the motor current (i) is cut after the individual samplings is set depending on an operating condition of the motor.

8. Method according to claim 7, in which in the immobilised state of the motor, i.e. when its rotor (35) cannot turn, the predetermined value of the motor current is reduced (S214, S220).

9. Method according to one or more of the preceding claims, in which the motor current is switched off when the rotor (35) is not turning.

10. Method according to claim 8 or 9, in which an attempt at starting is made at predetermined intervals of time (S224).

11. Direct current motor with a current limiting device for cutting the current through the motor (30) when or after the measured motor current (i) exceeds a predetermined upper current limit, whereby the current limiting device (72, 132, 142) is designed to work cyclically in service
- in order to cut the motor current in each case within a cycle (T_{c}) at a first point in time (t₂) at a predetermined interval of time (τ) after the motor current is switched on (t₁) if it lies above the predetermined upper limit value,
- in order then to cut the motor current at a second point in time (t₃) within the cycle, which point in time lies at a predetermined interval of time (τ) from the first point in time, if this motor current lies above the predetermined upper limit value at the second point in time (t₃),
- and in order then to begin a new cycle at a predetermined interval of time from the second point in time (t₃) and switch on the motor current again if it was switched off during the elapsed cycle.

12. Direct current motor according to claim 11, in which a switching device is provided which reduces the predetermined upper current limit to a lower value when the rotor (35) is immobilised.

13. Direct current motor according to claim 11, in which a cut-out device is provided which switches off the motor current when the rotor (35) is immobilised.

14. Direct current motor according to claim 12 or 13, in which a device is provided which starts the motor anew after a predetermined length of time has elapsed when the rotor (35) is immobilised.

## Revendications

1. Procédé pour limiter le courant dans le cas d'un moteur à courant continu, qui comporte les étapes suivantes :
- au cours de cycles successifs d'une durée essentiellement constante (T_{c}), le moteur est chaque fois mis sous tension (i) à un moment préalablement défini (t₁) d'un cycle (S168) et, après un intervalle de temps préalablement défini (τ) suivant la mise sous tension, le courant est soumis à une première opération de mesure (S174) et est coupé (S176) s'il est supérieur à une valeur préalablement définie ;
- après un intervalle de temps préalablement défini (τ) suivant la première opération de mesure, le courant du moteur, s'il n'a pas été coupé après la première opération de mesure, est soumis pendant le même cycle à une deuxième opération de mesure (S182) et est coupé (S184) s'il est supérieur à une valeur préalablement définie ;
- après un intervalle de temps préalablement défini suivant la deuxième opération de mesure, le moteur est remis sous tension (S168) si le courant a été coupé lors de l'une des opérations de mesure, et le cycle recommence.

2. Procédé selon la revendication 1, selon lequel la durée (T_{c}) d'un cycle est inférieure à 100 µs pour conserver une limitation de courant avec une fréquence d'au moins 10 kHz.

3. Procédé selon la revendication 1 ou 2, selon lequel après un intervalle de temps préalablement défini (τ) suivant la deuxième opération de mesure, et avant de remettre le courant, le courant du moteur (i) est à nouveau soumis pendant le même cycle à une troisième opération de mesure (S188) et est coupé s'il ne l'a pas été lors de la première ou la deuxième opération de mesure et s'il est supérieur à une valeur préalablement définie.

4. Procédé selon l'une ou plusieurs des revendications 1 à 3, selon lequel les intervalles préalablement définis (τ) entre la mise sous tension et la première opération de mesure, ainsi qu'entre la première opération de mesure et la deuxième opération de mesure sont essentiellement identiques.

5. Procédé selon la revendication 3 ou 4, selon lequel l'intervalle de temps préalablement défini (τ) entre la mise sous tension et la première opération de mesure, entre la première opération de mesure et la deuxième opération de mesure, et entre la deuxième opération de mesure et la troisième opération de mesure est chaque fois essentiellement identique.

6. Procédé selon l'une ou plusieurs des revendications précédentes, selon lequel, à la suite de la mise sous tension du moteur, les opérations de mesure du courant du moteur sont désactivées pendant un certain nombre de tours ou pendant un intervalle de temps préalablement défini (S170, S196), afin de désactiver la limitation de courant directement après la mise sous tension du moteur et de permettre un démarrage avec le courant maximal et le couple moteur maximal.

7. Procédé selon l'une ou plusieurs des revendications précédentes, selon lequel la valeur préalablement définie pour le courant du moteur, qui déclenche la coupure du courant du moteur (i) après les différentes opérations de mesure, est réglée en fonction d'un régime de fonctionnement du moteur.

8. Procédé selon la revendication 7, selon lequel lorsque le moteur est bloqué, c'est-à-dire lorsque son rotor (35) ne peut plus tourner, la valeur préalablement définie du courant du moteur est réduite (S214, S220).

9. Procédé selon l'une ou plusieurs des revendications précédentes, selon lequel il y a coupure du courant du moteur lorsque le rotor (35) ne tourne pas.

10. Procédé selon la revendication 8 ou 9, selon lequel on effectue une tentative de démarrage à intervalles de temps préalablement définis (S224).

11. Moteur à courant continu muni d'un dispositif de limitation du courant pour couper le courant par le biais du moteur (30) lorsque ou après que le courant mesuré du moteur (i) dépasse ou a dépassé une limite supérieure préalablement définie, sachant que le dispositif de limitation du courant (72, 132, 142) est réalisé de manière à fonctionner par cycle
- pour couper le courant du moteur pendant un cycle (T_{c}), à un premier instant (t₂) suivant la mise sous tension (t₁) du moteur avec un intervalle de temps préalablement défini (τ), si ce courant est supérieur à la valeur limite supérieure préalablement définie,
- pour ensuite, à un deuxième instant (t₃) du cycle, instant qui se situe à un intervalle de temps préalablement défini (τ) du premier instant, couper le courant du moteur si celui-ci est supérieur à la valeur limite supérieure préalablement définie au deuxième instant (t₃),
- et pour enfin commencer un nouveau cycle à un intervalle de temps préalablement défini du deuxième instant (t₃) et remettre le moteur sous tension si le courant à été coupé au cours du cycle écoulé.

12. Moteur à courant continu selon la revendication 11, dans lequel est prévu un dispositif de commutation qui réduit la valeur limite supérieure du courant préalablement définie à une valeur inférieure lorsque le rotor (35) se bloque.

13. Moteur à courant continu selon la revendication 11, dans lequel est prévu un interrupteur qui coupe le courant du moteur lorsque le rotor (35) se bloque.

14. Moteur à courant continu selon la revendication 12 ou 13, dans lequel est prévu un dispositif qui, lorsque le rotor (35) est bloqué, fait redémarrer le moteur après qu'un temps préalablement défini s'est écoulé.
